(19) **Europäisches Patentamt / European Patent Office / Office européen des brevets**

(11) **EP 3 098 631 B1**

(12) # EUROPEAN PATENT SPECIFICATION

(45) Date of publication and mention of the grant of the patent:
**06.03.2019 Bulletin 2019/10**

(51) Int Cl.:
**G02B 6/036** (2006.01)     **G02B 6/028** (2006.01)

(21) Application number: **14879549.5**

(22) Date of filing: **23.09.2014**

(86) International application number:
**PCT/CN2014/087158**

(87) International publication number:
**WO 2015/109861 (30.07.2015 Gazette 2015/30)**

(54) **SMALL BENDING RADIUS SINGLE-MODE OPTICAL FIBER WITH COMPATIBILITY**

MONOMODUSGLASFASER MIT KLEINEM BIEGERADIUS MIT KOMPATIBILITÄT

FIBRE OPTIQUE MONOMODE À FAIBLE RAYON DE COURBURE AVEC UNE COMPATIBILITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.01.2014 CN 201410037490**

(43) Date of publication of application:
**30.11.2016 Bulletin 2016/48**

(73) Proprietor: **Fiberhome Telecommunication Technologies Co. Ltd**
**East Lake High-Tech Zone**
**Wuhan City**
**Hubei 430074 (CN)**

(72) Inventors:
• **LUO, Wenyong**
**Wuhan**
**Hubei 430074 (CN)**
• **LI, Shiyu**
**Wuhan**
**Hubei 430074 (CN)**
• **CHEN, Wei**
**Wuhan**
**Hubei 430074 (CN)**
• **MO, Qi**
**Wuhan**
**Hubei 430074 (CN)**
• **KE, Yili**
**Wuhan**
**Hubei 430074 (CN)**
• **HU, Fuming**
**Wuhan**
**Hubei 430074 (CN)**

(74) Representative: **Neugebauer, Jürgen**
**Casalonga & Partners**
**Bayerstraße 71-73**
**80335 München (DE)**

(56) References cited:
| | |
|---|---|
| WO-A1-2013/090759 | CN-A- 1 818 728 |
| CN-A- 102 645 699 | CN-A- 102 667 554 |
| CN-A- 102 944 910 | CN-A- 103 472 525 |
| CN-A- 103 869 410 | US-A1- 2007 147 756 |
| US-A1- 2007 189 699 | US-A1- 2010 027 951 |

Description

TECHNICAL FIELD

The present invention relates to the field of single-mode optical fibers, and specifically to a small bending radius single-mode optical fiber with compatibility with conventional optical fibres.

BACKGROUND ART

At present, the construction of communication networks has mobilized the rapid development of fiber-to-the-home (FTTH) and ODN technology, which put forward a high requirement upon the resistance-to-bending performance of optical fibers. When the optical fibers are bent, some light of power leaks to make optical signals attenuated. Materials such as the coating absorb the leaked light and thus are heated. Studies have found that after running for a long time under the bending radius of 15mm, a jumper made of conventional G.652D single-mode optical fibers will be destroyed between two connection end points due to continued heating, thus leading to the continued reduction of splicing loss and non-recoverable damage. In the ODN, a great number of optical fibers are arranged in a bending manner in a small distributor. As the bending of the optical fibers leads to the leak of optical power, heating is resulted. It will severely influence the communication stability of the ODN.

Improving the resistance-to-bending performance of optical fibers can not only be good for guaranteeing the high-quality transmission of optical signals, but also reduce the overall heating value of the communication system of the optical fibers so as to promote the overall performance of the system. Global leading enterprises of optical fibers have carried out in-depth studies on the requirements of the hotspot ODN technology of communication networks upon super-strong bending-resistant optical fibers. Domestic optical fiber and cable enterprises have currently focused on the technical studies of a 10mm bending radius required by the ITUT-G.657 or a smaller bending radius single-mode optical fiber, like G.657B2/3.

However, to meet the floor space requirement of the construction of optical fiber networks and 3G networks, the ODN technology demands that a great number of devices are disposed in a rather small distributor. As a consequence, the space for the optical fibers for high-speed high-bandwidth communication connection between the devices is narrowed, and the bending performance of the optical fibers must be higher. Super-strong bending-resistant single-mode optical fibers, of which the bending radius is 3mm or even 2mm below, are needed in more and more applications. Besides, such super-strong bending-resistant single-mode optical fibers must be well compatible with common single-mode optical fibers; their single-point fusion loss must be controlled within an acceptable small range.

Optical fibers for FTTH actually need two key characteristics, one is resistance to bending, a fundamental characteristic to achieve the small bending radius and low loss transmission of optical signals, the other is certain compatibility with conventional G.652 optical fibers. Nearly all the optical fibers arranged in a large number at the front end of the current backbone network and metropolitan area network or even access network are G.652 optical fibers. If the optical fibers chosen for the FTTH section cannot be well compatible with the G.652 optical fibers, even though they have high bending performance, a large loss can be caused when they are fused with the conventional G.652 optical fibers, and the optical signals can also be largely depleted at the connection of the two optical fibers, thus an additionally greater optical gain is needed, or else the G.652 optical fibers will still be used at the FTTH end. Therefore, although bending-resistant optical fibers have been supplied now, as they cannot be well compatibility with the conventional G.652 optical fibers, they are not massively adopted in the FTTH market.

A small bending radius single mode optical fibre is known from US2007189699.

SUMMARY

Aiming to overcome the defects of the prior art, the present invention provides a small bending radius single-mode optical fiber with compatibility with conventional G.652 optical fibres, which achieves a quite strong resistance to bending, the radius of which is below 2mm, and is well compatible with conventional single-mode optical fibers.

To achieve the above-mentioned aim, the present invention adopts a technical scheme as follows: a small bending radius single-mode optical fiber with compatibility with conventional G.652 optical fibres comprises a core gradient layer and a germanium-doped core layer arranged concentrically, and a first wrapping layer, a second wrapping layer and a third wrapping layer arranged concentrically from the inner to the outer; a first transition layer is arranged between the germanium-doped core layer and the first wrapping layer, a second transition layer is arranged between the first wrapping layer and the second wrapping layer, and a third transition layer is arranged between the second wrapping layer and the third wrapping layer; the difference of relative index of refraction of the core gradient layer is $\Delta n1$, which is realized through an equation: $\Delta n1 = a_1(x_1 + x_1^2 + x_1^3) + b_1$, wherein $x_1$ is the distance from any point within the core gradient layer to the axis of said layer, $a_1$ is gradient factor of the core gradient layer, ranging from 0.5% to 2%, and $b_1$ is gradient stability factor of the core gradient layer, ranging from 0 to 0.2%; the difference of relative index of refraction of the first transition layer is $\Delta n3$, which is realized through an equation: $\Delta n3 = b_3(1 - a_3x_3^2)^{0.5}$, wherein $x_3$ is the distance from a concentric circle around the centre of an optical fiber at any point within the first transition layer 3 to the outer edge of the germanium-doped core layer 2, and $a_3$ and $b_3$ are transition factors, both ranging from 0.3% to 0.8%; the difference of relative index of refraction of the second transition layer is $\Delta n5$, which is realized through an equation: $\Delta n5 = a_5 x_5^2 + b_5$, wherein $x_5$ is the distance from a concentric circle around the centre of an optical fiber at any point within the second transition layer 5 to the outer edge of the first wrapping layer 4, and as and $b_5$ are transition factors, as ranging from -1.0% to -0.3%, and $b_5$ ranging from 0 to 0.1%; and the difference of relative index of refraction of the third transition layer is $\Delta n7$, which is realized through an equation: $\Delta n7 = a_7 x_7^2 + b_7$, wherein x7 is the distance from a concentric circle around the centre of an optical fiber at any point within the third transition layer 7 to the outer edge of the second wrapping layer 6, and $a_7$ and $b_7$ are transition factors, $a_7$ ranging from 0.1% to 0.4%, and $b_7$ ranging from -1.3% to -0.3%.

Based on the above-mentioned technical scheme, the ratio of the thickness of the germanium-doped core layer to the thickness of the first wrapping layer is from 0.5 to 2.0.

Based on the above-mentioned technical scheme, the ratio of the thickness of the germanium-doped core layer to the thickness of the second wrapping layer is from 0.2 to 1.0.

Based on the above-mentioned technical scheme, the difference of relative index of refraction of the germanium-doped core layer is from 0.2% to 0.8%.

Based on the above-mentioned technical scheme, the difference of relative index of refraction of the first wrapping layer is from 0 to 0.1%.

Based on the above-mentioned technical scheme, the difference of relative index of refraction of the second wrapping layer is from -1.3% to -0.3%.

Based on the above-mentioned technical scheme, the diameter of the third wrapping layer, a quartz wrapping layer, is $80\mu m$ or $125\mu m$.

Based on the above-mentioned technical scheme, when the operating wavelength is 1550nm, the attenuation of the small bending radius single-mode optical fiber is below 0.2dB/km, and when the bending radius is below 2mm, the additional loss is below 0.35dB.

The present invention has the following beneficial effects:

> 1. a plurality of wrapping layers, namely a first wrapping layer doped with low germanium, a second wrapping layer doped with high fluorine and a third wrapping layer composed of quartz, are arranged outside a germanium-doped core layer to form a mountain-shaped waveguide structure, thus strengthening the resistance to bending of the optical fiber through the reduction of macrobend and microbend losses; and
> 2. a transition layer is arranged between the germanium-doped core layer and the first wrapping layer, as well as between the first and the second wrapping layers and between the second and the third wrapping layers, and a core gradient layer is arranged inside the germanium-doped core layer, so that the mode and stress characteristics of the optical fiber are optimized; therefore, when the small bending radius single-mode optical fiber is fused with conventional G.652 single-mode optical fibers, the loss at the fusion point can be controlled to the minimum, and the small bending radius single-mode optical fiber is well compatible with the conventional single-mode optical fibers, thus laying the foundation for optical fibers for FTTH and ODN technology.

## BRIEF DESCRIPTION OF DRAWINGS

> FIG. 1 is a schematic structural diagram of an end face of a small bending radius single-mode optical fiber with compatibility of the present invention;
> FIG. 2 is a schematic structural diagram of a waveguide of a small bending radius single-mode optical fiber with compatibility of the present invention;
> FIG. 3 is a schematic structural diagram of mode field control of a small bending radius single-mode optical fiber with compatibility;
> FIG. 4 is an additional loss for optical fiber bending when a wrapping layer in FIG. 1 is $125\mu m$ in diameter; and
> FIG. 5 is an additional loss for optical fiber bending when a wrapping layer in FIG. 1 is $80\mu m$ in diameter.

## DESCRIPTION OF EMBODIMENTS

The following will further describe the present invention according to drawings.

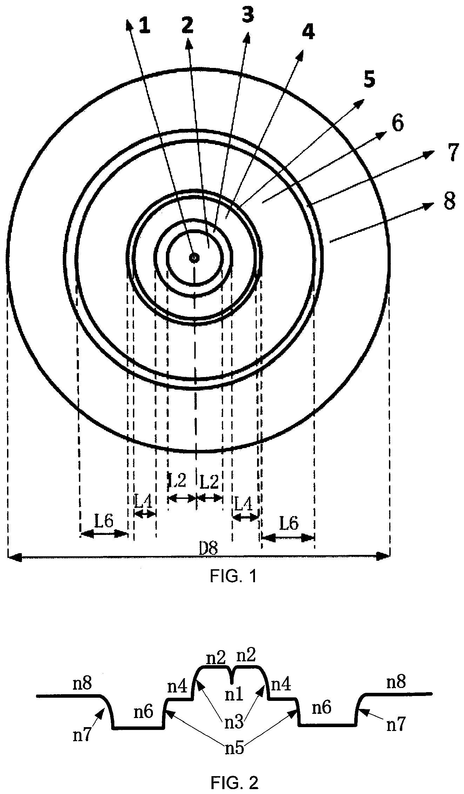

As shown in FIG. 1, a small bending radius single-mode optical fiber with compatibility with conventional G.652 optical fibres of the present invention comprises a core gradient layer 1, a germanium-doped core layer 2, a first transition layer 3, a first wrapping layer 4, a second transition layer 5, a second wrapping layer 6, a third transition layer 7 and a third wrapping layer 8, said layers being arranged concentrically from the inner to the outer, wherein the core gradient layer 1 is arranged inside the germanium-doped core layer 2, the first transition layer 3 is located between the core gradient layer 1 and the first wrapping layer 4, the second transition layer 5 is located between the first wrapping layer 4 and the second wrapping layer 6, and the third transition layer 7 is located between the second wrapping layer 6 and the third wrapping layer 8; the ratio of the thickness L2 of the germanium-doped core layer 2 to the thickness L4 of the first wrapping layer 4 is from 0.5 to 2.0; the ratio of the thickness L2 of the germanium-doped core layer 2 to the thickness L6 of the second wrapping layer 6 is from 0.2 to 1.0; the diameter D8 of the third wrapping layer 8, a quartz

wrapping layer, is 80μm or 125μm; after being coated, the small bending radius single-mode optical fiber of the present invention has the diameter of 200μm or 245μm.

As shown in FIG. 2, the index of refraction of the core gradient layer 1 is n1, the index of refraction of the germanium-doped layer 2 is n2, the index of refraction of the first transition layer 3 is n3, the index of refraction of the first wrapping layer 4 is n4, the index of refraction of the third transition layer 5 is n5, the index of refraction of the second wrapping layer 6 is n6, the index of refraction of the third wrapping layer 7 is n7, and the index of refraction of the third wrapping layer 8 is n8; the index of refraction of the third wrapping layer 8, namely n8, is chosen as the index of refraction of an equivalent quartz wrapping layer, namely n. To realize these indexes of refraction, a method of difference of relative index of refraction is adopted. On the basis of the index of refraction of the quartz wrapping layer, namely n, a difference of relative index of refraction occurs between each waveguide layer and the quartz wrapping layer. Accordingly, the index of refraction of each layer included in the mountain-shaped waveguide structure of the present invention is measured and realized. An equation is adopted for the difference of relative index of refraction:

$$\Delta n = (n' - n) / (n' + n) \times 100\% \quad (1)$$

wherein n is the index of refraction of the quartz wrapping layer, namely the index of refraction of the third wrapping layer 8 of the present invention, n8, and n' is the index of refraction of the corresponding layer.

As for the present invention, to calculate the difference of relative index of refraction of the core gradient layer 1 and the quartz wrapping layer, n' in the equation adopts the index of refraction of the fiber core, namely n1; to calculate the difference of relative index of refraction of the germanium-doped core layer and the quartz wrapping layer, n' in the equation adopts the index of refraction of the fiber core, namely n2; to calculate the difference of relative index of refraction of the core of the first transition layer 3 and the quartz wrapping layer, n' in the equation adopts the index of refraction of the first transition layer, namely n3; to calculate the difference of relative index of refraction of the first wrapping layer 4 and the quartz wrapping layer, n' in the equation adopts the index of refraction of the first wrapping layer, namely n4; to calculate the difference of relative index of refraction of the second transition layer 5 and the quartz wrapping layer, n' in the equation adopts the index of refraction of the second transition layer, namely n5; to calculate the difference of index of refraction of the second wrapping layer 6 and the fluorine-doped wrapping layer, n' in the equation adopts the index of refraction of the second wrapping layer, namely n6; to calculate the difference of index of refraction of the third transition layer 7 and the quartz wrapping layer, n' in the equation adopts the index of refraction of the second transition layer, namely n7.

Accordingly, it can be figured out by the equation (1) that the difference of relative index of refraction of the core gradient layer 1 is Δn1, the difference of relative index of refraction of the germanium-doped core layer 2 is Δn2, the difference of relative index of refraction of the first transition layer 3 is Δn3, the difference of relative index of refraction of the first wrapping layer 4 is Δn4, the difference of relative index of refraction of the second transition layer 5 is Δn5, the difference of relative index of refraction of the second wrapping layer 6 is Δn6, and the difference of relative index of refraction of the third transition layer 7 is Δn7. The difference of relative index of refraction of the germanium-doped core layer 2 is between 0.2% and 0.8%; the difference of relative index of refraction of the first wrapping layer 4, a low germanium-doped wrapping layer, is between 0 and 0.1%; the difference of relative index of refraction of the second wrapping layer 6, a high fluorine-doped wrapping layer, is between -1.3% and -0.3%.

The difference of relative index of refraction of the core gradient layer 1 is Δn1, which is realized through an equation: $\Delta n1 = a_1(x_1 + x_1^2 + x_1^3) + b_1$, wherein $x_1$ is the distance from any point within the core gradient layer 1 to the axis of said layer, $a_1$ is gradient factor of the core gradient layer 1, ranging from 0.5% to 2%, and $b_1$ is gradient stability factor of the core gradient layer 1, ranging from 0 to 0.2%.

The difference of relative index of refraction of the first transition layer 3 is Δn3, which is realized through an equation: $\Delta n3 = b_3(1 - a_3x_3^2)^{0.5}$, wherein $x_3$ is the distance from a concentric circle around the centre of an optical fiber at any point within the first transition layer 3 to the outer edge of the germanium-doped core layer 2, and $a_3$ and $b_3$ are transition factors, both ranging from 0.3% to 0.8%.

The difference of relative index of refraction of the second transition layer 5 is Δn5, which is realized through an equation: $\Delta n5 = a_5x_5^2 + b_5$, wherein $x_5$ is the distance from a concentric circle around the centre of an optical fiber at any point within the second transition layer 5 to the outer edge of the first wrapping layer 4, and as and $b_5$ are transition factors, as ranging from -1.0% to -0.3%, and $b_5$ ranging from 0 to 0.1%.

The difference of relative index of refraction of the third transition layer 7 is Δn7, which is realized through an equation: $\Delta n7 = a_7x_7^2 + b_7$, wherein x7 is the distance from a concentric circle around the centre of an optical fiber at any point within the third transition layer 7 to the outer edge of the second wrapping layer 6, and $a_7$ and $b_7$ are transition factors, $a_7$ ranging from 0.1% to 0.4%, and $b_7$ ranging from -1.3% to -0.3%.

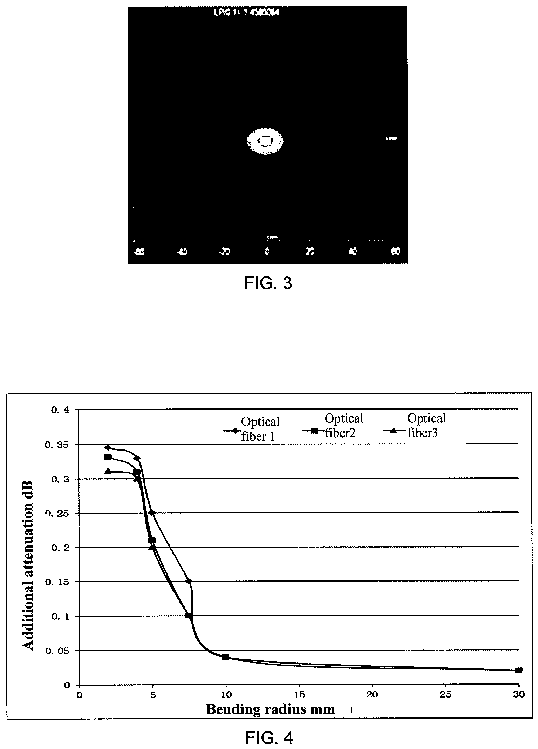

As shown in FIG. 3, according to the present invention, a triplex control is applied to the mode field of the small bending radius optical fiber through the germanium-doped fiber core 2, the first wrapping layer 4, the second wrapping layer 6 and the third wrapping layer 8, and the characteristics of the mode field are optimized to adapt to G.652 through the core gradient layer 1, the first transition layer 3, the second transition layer 5 and the third transition layer 7, thus the epitaxial mode field of the optical fiber is approximate to the mode field of G.652, and the central mode field is the characteristic mode field of the small bending radius optical fiber.

The following will further describe the present invention according to embodiments.

Embodiment 1:

in this embodiment, a small bending radius single-mode optical fiber, the diameter D8 of a third wrapping layer 8 is $125\mu m$; the difference of relative index of refraction of a core gradient layer 1 is $\Delta n1$, which is realized through an equation: $\Delta n1 = a_1(x_1 + x_1^2 + x_1^3) + b_1$, wherein $x_1$ is the distance from any point within the core gradient layer 1 to the axis of said layer, $a_1$ is gradient factor of the core gradient layer 1, falling within 0.5%, and $b_1$ is gradient stability factor of the core gradient layer 1, falling within 0;

the difference of relative index of refraction of a germanium-doped core layer 2, namely $\Delta n2$, keeps stable, constantly 0.2%;

the difference of relative index of refraction of a first transition layer 3 is $\Delta n3$, which is realized through an equation: $\Delta n3 = b_3(1 - a_3x_3 2)^{0.5}$, wherein $x_3$ is the distance from a concentric circle around the centre of an optical fiber at any point within the first transition layer 3 to the outer edge of the germanium-doped core layer 2, and as and $b_3$ are transition factors, $a_3$ falling within 0.8%, and $b_3$ falling within 0.3%;

the difference of relative index of refraction of a first wrapping layer 4, namely $\Delta n4$, keeps stable, constantly 0; the ratio of the thickness L2 of the germanium-doped core layer 2 to the thickness L4 of the first wrapping layer 4 is 2.0;

the difference of relative index of refraction of a second transition layer 5 is $\Delta n5$, which is realized through an equation: $\Delta n5 = a_5x_5^2 + b_5$, wherein $x_5$ is the distance from a concentric circle around the centre of an optical fiber at any point within the second transition layer 5 to the outer edge of the first wrapping layer 4, and $a_5$ and $b_5$ are transition factors, $a_5$ falling within -0.65%, and $b_5$ falling within 0.05%;

the difference of relative index of refraction of a second wrapping layer 6, namely $\Delta n6$, keeps stable, constantly -0.8%; the ratio of the thickness L2 of the germanium-doped core layer 2 to the thickness L4 of the second wrapping layer 6 is 1.0;

the difference of relative index of refraction of a third transition layer 7 is $\Delta n7$, which is realized through an equation: $\Delta n7 = a_7x_7^2 + b_7$, wherein x7 is the distance from a concentric circle around the centre of an optical fiber at any point within the third transition layer 7 to the outer edge of the second wrapping layer 6, and $a_7$ and $b_7$ are transition factors, $a_7$ falling within 0.25%, and $b_7$ falling within -0.8%;

according to FIG. 4, in this embodiment, the 1550nm attenuation of the small bending radius single-mode optical fiber is 0.191dB/km, the fusion loss between the small bending radius single-mode optical fiber and a conventional G.652 optical fiber reaches 0.08dB, and the additional loss under the bending radius of 2mm is below 0.345dB.

Embodiment 2:

this embodiment is of a structure basically the same as embodiment 1; the diameter D8 of a third wrapping layer 8 is $125\mu m$; the difference of relative index of refraction of a core gradient layer 1 is $\Delta n1$, which is realized through an equation: $\Delta n1 = a_1(x_1 + x_1^2 + x_1^3) + b_1$, wherein $x_1$ is the distance from any point within the core gradient layer 1 to the axis of said layer, $a_1$ is gradient factor of the core gradient layer 1, falling within 1%, and $b_1$ is gradient stability factor of the core gradient layer 1, falling within 0.2;

the difference of relative index of refraction of a germanium-doped core layer 2, namely $\Delta n2$, keeps stable, constantly 0.5%;

the difference of relative index of refraction of a first transition layer 3 is $\Delta n3$, which is realized through an equation: $\Delta n3 = b_3(1 - a_3x_3^2)^{0.5}$, wherein $x_3$ is the distance from a concentric circle around the centre of an optical fiber at any point within the first transition layer 3 to the outer edge of the germanium-doped core layer 2, and $a_3$ and $b_3$ are transition factors, $a_3$ falling within 0.5, and $b_3$ falling within 0.5%;

the difference of relative index of refraction of a first wrapping layer 4, namely $\Delta n4$, keeps stable, constantly 0; the ratio of the thickness L2 of the germanium-doped core layer 2 to the thickness L4 of the first wrapping layer 4 is 1.0;

the difference of relative index of refraction of a second transition layer 5 is $\Delta n5$, which is realized through an equation: $\Delta n5 = a_5x_5^2 + b_5$, wherein $x_5$ is the distance from a concentric circle around the centre of an optical fiber at any point within the second transition layer 5 to the outer edge of the first wrapping layer 4, and $a_5$ and $b_5$ are transition factors, $a_5$ falling within -0.3%, and $b_5$ falling within 0.1%;

the difference of relative index of refraction of a second wrapping layer 6, namely $\Delta n6$, keeps stable, constantly -0.3%; the ratio of the thickness L2 of the germanium-doped core layer 2 to the thickness L4 of the second wrapping layer 6 is 0.5;

the difference of relative index of refraction of a third transition layer 7 is $\Delta$n7, which is realized through an equation: $\Delta n7 = a_7 x_7^2 + b_7$, wherein $x7$ is the distance from a concentric circle around the centre of an optical fiber at any point within the third transition layer 7 to the outer edge of the second wrapping layer 6, and $a_7$ and $b_7$ are transition factors, $a_7$ falling within 0.1%, and $b_7$ falling within -0.3%;

according to FIG. 4, in this embodiment, the 1550nm attenuation of the small bending radius single-mode optical fiber is 0.193dB/km, the fusion loss between the small bending radius single-mode optical fiber and a conventional G.652 optical fiber reaches 0.11dB, and the additional loss under the bending radius of 2mm is below 0.332dB.

Embodiment 3:

this embodiment is of a structure basically the same as embodiment 1; the diameter D8 of a third wrapping layer 8 is 125$\mu$m; the difference of relative index of refraction of a core gradient layer 1 is $\Delta$n1, which is realized through an equation: $\Delta n1 = a_1(x_1 + x_1^2 + x_1^3) + b_1$, wherein $x_1$ is the distance from any point within the core gradient layer 1 to the axis of said layer, $a_1$ is gradient factor of the core gradient layer 1, falling within 2%, and $b_1$ is gradient stability factor of the core gradient layer 1, falling within 0.1;

the difference of relative index of refraction of a germanium-doped core layer 2, namely $\Delta$n2, keeps stable, constantly 0.8%;

the difference of relative index of refraction of a first transition layer 3 is $\Delta$n3, which is realized through an equation: $\Delta n3 = b_3(1 - a_3 x_3^2)^{0.5}$, wherein $x_3$ is the distance from a concentric circle around the centre of an optical fiber at any point within the first transition layer 3 to the outer edge of the germanium-doped core layer 2, and $a_3$ and $b_3$ are transition factors, $a_3$ falling within 0.3, and $b_3$ falling within 0.8%;

the difference of relative index of refraction of a first wrapping layer 4, namely $\Delta$n4, keeps stable, constantly 0; the ratio of the thickness L2 of the germanium-doped core layer 2 to the thickness L4 of the first wrapping layer 4 is 0.5;

the difference of relative index of refraction of a second transition layer 5 is $\Delta$n5, which is realized through an equation: $\Delta n5 = a_5 x_5^2 + b_5$, wherein $x_5$ is the distance from a concentric circle around the centre of an optical fiber at any point within the second transition layer 5 to the outer edge of the first wrapping layer 4, and $a_5$ and $b_5$ are transition factors, $a_5$ falling within -1.3%, and $b_5$ falling within 0%;

the difference of relative index of refraction of a second wrapping layer 6, namely $\Delta$n6, keeps stable, constantly -1.3%; the ratio of the thickness L2 of the germanium-doped core layer 2 to the thickness L4 of the second wrapping layer 6 is 0.2;

the difference of relative index of refraction of a third transition layer 7 is $\Delta$n7, which is realized through an equation: $\Delta n7 = a_7 x_7^2 + b_7$, wherein $x7$ is the distance from a concentric circle around the centre of an optical fiber at any point within the third transition layer 7 to the outer edge of the second wrapping layer 6, and $a_7$ and $b_7$ are transition factors, $a_7$ falling within 0.4%, and $b_7$ falling within -1.3%;

according to FIG. 4, in this embodiment, the 1550nm attenuation of the small bending radius single-mode optical fiber is 0.194dB/km, the fusion loss between the small bending radius single-mode optical fiber and a conventional G.652 optical fiber reaches 0.15dB, and the additional loss under the bending radius of 2mm is below 0.311dB.

Embodiment 4:

in this embodiment, the diameter D8 of a third wrapping layer 8 is 80$\mu$m; the difference of relative index of refraction of a core gradient layer 1 is $\Delta$n1, which is realized through an equation: $\Delta n1 = a_1(x_1 + x_1^2 + x_1^3) + b_1$, wherein $x_1$ is the distance from any point within the core gradient layer 1 to the axis of said layer, $a_1$ is gradient factor of the core gradient layer 1, falling within 0.5%, and $b_1$ is gradient stability factor of the core gradient layer 1, falling within 0;

the difference of relative index of refraction of a germanium-doped core layer 2, namely $\Delta$n2, keeps stable, constantly 0.2%;

the difference of relative index of refraction of a first transition layer 3 is $\Delta$n3, which is realized through an equation: $\Delta n3 = b_3(1 - a_3 x_3^2)^{0.5}$, wherein $x_3$ is the distance from a concentric circle around the centre of an optical fiber at any point within the first transition layer 3 to the outer edge of the germanium-doped core layer 2, and $a_3$ and $b_3$ are transition factors, $a_3$ falling within 0.8, and $b_3$ falling within 0.3%;

the difference of relative index of refraction of a first wrapping layer 4, namely $\Delta$n4, keeps stable, constantly 0; the ratio of the thickness L2 of the germanium-doped core layer 2 to the thickness L4 of the first wrapping layer 4 is 2.0;

the difference of relative index of refraction of a second transition layer 5 is $\Delta$n5, which is realized through an equation: $\Delta n5 = a_5 x_5^2 + b_5$, wherein $x_5$ is the distance from a concentric circle around the centre of an optical fiber at any point within the second transition layer 5 to the outer edge of the first wrapping layer 4, and $a_5$ and $b_5$ are transition factors, $a_5$ falling within -0.75%, and $b_5$ falling within 0.06%;

the difference of relative index of refraction of a second wrapping layer 6, namely $\Delta n6$, keeps stable, constantly -0.9%; the ratio of the thickness L2 of the germanium-doped core layer 2 to the thickness L4 of the second wrapping layer 6 is 1.0;

the difference of relative index of refraction of a third transition layer 7 is $\Delta n7$, which is realized through an equation: $\Delta n7 = a_7 x_7{}^2 + b_7$, wherein $x_7$ is the distance from a concentric circle around the centre of an optical fiber at any point within the third transition layer 7 to a concentric circle around the centre of an optical fiber at the outer edge of the second wrapping layer 6, and $a_7$ and $b_7$ are transition factors, $a_7$ falling within 0.3%, and $b_7$ falling within -0.9%;

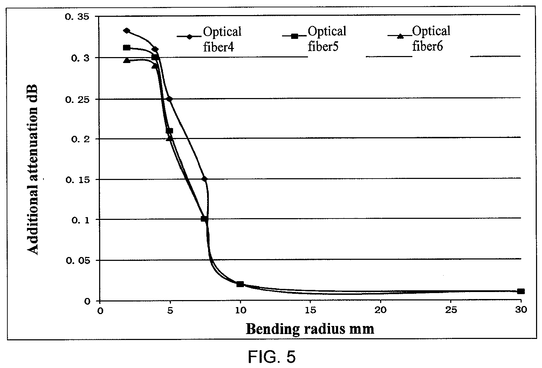

according to FIG. 5, in this embodiment, the 1550nm attenuation of the small bending radius single-mode optical fiber is 0.195dB/km, the fusion loss between the small bending radius single-mode optical fiber and a conventional G.652 optical fiber reaches 0.13dB, and the additional loss under the bending radius of 2mm is below 0.332dB.

Embodiment 5:

this embodiment is of a structure basically the same as embodiment 5; the diameter D8 of a third wrapping layer 8 is 80$\mu$m; the difference of relative index of refraction of a core gradient layer 1 is $\Delta n1$, which is realized through an equation: $\Delta n1 = a_1(x_1 + x_1{}^2 + x_1{}^3) + b_1$, wherein $x_1$ is the distance from any point within the core gradient layer 1 to the axis of said layer, $a_1$ is gradient factor of the core gradient layer 1, falling within 1.3%, and $b_1$ is gradient stability factor of the core gradient layer 1, falling within 0.2;

the difference of relative index of refraction of a germanium-doped core layer 2, namely $\Delta n2$, keeps stable, constantly 0.6%;

the difference of relative index of refraction of a first transition layer 3 is $\Delta n3$, which is realized through an equation: $\Delta n3 = b_3(1 - a_3 x_3{}^2)^{0.5}$, wherein $x_3$ is the distance from a concentric circle around the centre of an optical fiber at any point within the first transition layer 3 to the outer edge of the germanium-doped core layer 2, and $a_3$ and $b_3$ are transition factors, $a_3$ falling within 0.6, and $b_3$ falling within 0.45%;

the difference of relative index of refraction of a first wrapping layer 4, namely $\Delta n4$, keeps stable, constantly 0; the ratio of the thickness L2 of the germanium-doped core layer 2 to the thickness L4 of the first wrapping layer 4 is 0.9;

the difference of relative index of refraction of a second transition layer 5 is $\Delta n5$, which is realized through an equation: $\Delta n5 = a_5 x_5{}^2 + b_5$, wherein $x_5$ is the distance from a concentric circle around the centre of an optical fiber at any point within the second transition layer 5 to the outer edge of the first wrapping layer 4, and as and $b_5$ are transition factors, as falling within -0.3%, and $b_5$ falling within 0.1%;

the difference of relative index of refraction of a second wrapping layer 6, namely $\Delta n6$, keeps stable, constantly -0.3%; the ratio of the thickness L2 of the germanium-doped core layer 2 to the thickness L4 of the second wrapping layer 6 is 0.4;

the difference of relative index of refraction of a third transition layer 7 is $\Delta n7$, which is realized through an equation: $\Delta n7 = a_7 x_7{}^2 + b_7$, wherein $x_7$ is the distance from a concentric circle around the centre of an optical fiber at any point within the third transition layer 7 to the outer edge of the second wrapping layer 6, and $a_7$ and $b_7$ are transition factors, $a_7$ falling within 0.1%, and $b_7$ falling within -0.3%;

according to FIG. 5, in this embodiment, the 1550nm attenuation of the small bending radius single-mode optical fiber is 0.197dB/km, the fusion loss between the small bending radius single-mode optical fiber and a conventional G.652 optical fiber reaches 0.16dB, and the additional loss under the bending radius of 2mm is below 0.312dB.

Embodiment 6:

this embodiment is of a structure basically the same as embodiment 5; the diameter D8 of a third wrapping layer 8 is 80$\mu$m; the difference of relative index of refraction of a core gradient layer 1 is $\Delta n1$, which is realized through an equation: $\Delta n1 = a_1(x_1 + x_1{}^2 + x_1{}^3) + b_1$, wherein $x_1$ is the distance from any point within the core gradient layer 1 to the axis of said layer, $a_1$ is gradient factor of the core gradient layer 1, falling within 2%, and $b_1$ is gradient stability factor of the core gradient layer 1, falling within 0.1%;

the difference of relative index of refraction of a germanium-doped core layer 2, namely $\Delta n2$, keeps stable, constantly 0.8%;

the difference of relative index of refraction of a first transition layer 3 is $\Delta n3$, which is realized through an equation: $\Delta n3 = b_3(1 - a_3 x_3{}^2)^{0.5}$, wherein $x_3$ is the distance from a concentric circle around the centre of an optical fiber at any point within the first transition layer 3 to the outer edge of the germanium-doped core layer 2, and $a_3$ and $b_3$ are transition factors, $a_3$ falling within

0.3, and $b_3$ falling within 0.8%;

the difference of relative index of refraction of a first wrapping layer 4, namely $\Delta n4$, keeps stable, constantly 0.1%, the ratio of the thickness L2 of the germanium-doped core layer 2 to the thickness L4 of the first wrapping layer 4 is 0.5;

the difference of relative index of refraction of a second transition layer 5 is $\Delta n5$, which is realized through an equation: $\Delta n5 = a_5x_5^2 + b_5$, wherein $x_5$ is the distance from a concentric circle around the centre of an optical fiber at any point within the second transition layer 5 to the outer edge of the first wrapping layer 4, and $a_5$ and $b_5$ are transition factors, $a_5$ falling within -1.3%, and $b_5$ falling within 0;

the difference of relative index of refraction of a second wrapping layer 6, namely $\Delta n6$, keeps stable, constantly -1.3%; the ratio of the thickness L2 of the germanium-doped core layer 2 to the thickness L4 of the second wrapping layer 6 is 0.2;

the difference of relative index of refraction of a third transition layer 7 is $\Delta n7$, which is realized through an equation: $\Delta n7 = a_7x_7^2 + b_7$, wherein $x_7$ is the distance from a concentric circle around the centre of an optical fiber at any point within the third transition layer 7 to the outer edge of the second wrapping layer 6, and $a_7$ and $b_7$ are transition factors, $a_7$ falling within 0.4%, and $b_7$ falling within -1.3%;

according to FIG. 5, in this embodiment, the 1550nm attenuation of the small bending radius single-mode optical fiber is 0.199dB/km, the fusion loss between the small bending radius single-mode optical fiber and a conventional G.652 optical fiber reaches 0.19dB, and the additional loss under the bending radius of 2mm is below 0.297dB.

The present invention is not limited to the above-mentioned embodiments. A person of ordinary skill in the technical field may make certain improvements without departing from the principle of the present invention; the improvements shall fall within the protection scope of the present invention. Those not described in detail in the specification shall be prior art known to persons professionally skilled in the field.

## Claims

1. A small bending radius single-mode optical fiber with compatibility with conventional G.652 optical fibers, comprising a core gradient layer (1) and a germanium-doped core layer (2) arranged concentrically, and a first wrapping layer (4), a second wrapping layer (6) and a third wrapping layer (8) arranged concentrically from the inner to the outer, wherein a first transition layer (3) is arranged between the germanium-doped core layer (2) and the first wrapping layer (4), a second transition layer (5) is arranged between the first wrapping layer (5) and the second wrapping layer (6), and a third transition layer (7) is arranged between the second wrapping layer (6) and the third wrapping layer (8); **characterized in that**

    the difference of relative index of refraction of the core gradient layer (1) is $\Delta n1$, which is realized through an equation: $\Delta n1 = a_1(x_1 + x_1^2 + x_1^3) + b_1$, wherein $x_1$ is the distance from any point within the core gradient layer (1) to the axis of said layer, $a_1$ is gradient factor of the core gradient layer (1), ranging from 0.5% to 2%, and $b_1$ is gradient stability factor of the core gradient layer (1), ranging from 0 to 0.2%;

    the difference of relative index of refraction of the first transition layer (3) is $\Delta n3$, which is realized through an equation: $\Delta n3 = b_3(1 - a_3x_3^2)^{0.5}$, wherein $x_3$ is the distance from a concentric circle around the centre of an optical fiber at any point within the first transition layer (3) to the outer edge of the germanium-doped core layer (2), and $a_3$ and $b_3$ are transition factors, both ranging from 0.3% to 0.8%;

    the difference of relative index of refraction of the second transition layer (5) is $\Delta n5$, which is realized through an equation: $\Delta n5 = a_5x_5^2 + b_5$, wherein $x_5$ is the distance from a concentric circle around the centre of an optical fiber at any point within the second transition layer (5) to the outer edge of the first wrapping layer (4), and $a_5$ and $b_5$ are transition factors, $a_5$ ranging from -1.0% to -0.3%, and $b_5$ ranging from 0 to 0.1%; and

    the difference of relative index of refraction of the third transition layer (7) is $\Delta n7$, which is realized through an equation: $\Delta n7 = a_7x_7^2 + b_7$, wherein x7 is the distance from a concentric circle around the centre of an optical fiber at any point within the third transition layer (7) to the outer edge of the second wrapping layer (6), and $a_7$ and $b_7$ are transition factors, $a_7$ ranging from 0.1% to 0.4%, and $b_7$ ranging from -1.3% to -0.3%.

2. The small bending radius single-mode optical fiber according to claim 1, **characterized in that** the ratio of the thickness of the germanium-doped core layer (2) to the thickness of the first wrapping layer (4) is from 0.5 to 2.0.

3. The small bending radius single-mode optical fiber according to claim 1, **characterized in that** the ratio of the thickness of the germanium-doped core layer (2) to the thickness of the second wrapping layer (6) is from 0.2 to 1.0.

**4.** The small bending radius single-mode optical fiber according to claim 1, **characterized in that** the difference of relative index of refraction of the germanium-doped core layer (2) is from 0.2% to 0.8%.

**5.** The small bending radius single-mode optical fiber according to claim 1, **characterized in that** the difference of relative index of refraction of the first wrapping layer (4) is from 0 to 0.1%.

**6.** The small bending radius single-mode optical fiber according to claim 1, **characterized in that** the difference of relative index of refraction of the second wrapping layer (6) is from - 1.3% to -0.3%.

**7.** The small bending radius single-mode optical fiber according to claim 1, **characterized in that** the diameter of the third wrapping layer (8), a quartz wrapping layer, is 80$\mu$m or 125$\mu$m.

**8.** The small bending radius single-mode optical fiber according to claim 1, **characterized in that** when the operating wavelength is 1550nm, the attenuation of the small bending radius single-mode optical fiber is below 0.2dB/km, and when the bending radius is below 2mm, the additional loss is below 0.35dB.

**Patentansprüche**

**1.** Monomodusglasfaser mit kleinem Biegeradius mit Kompatibilität mit herkömmlichen G.652-Glasfasern, umfassend eine Kern-Gradientenschicht (1) und eine germaniumdotierte Kernschicht (2), die konzentrisch angeordnet sind, und eine erste Wickelschicht (4), eine zweite Wickelschicht (6) und eine dritte Wickelschicht (8), die konzentrisch von innen nach außen angeordnet sind, wobei eine erste Übergangsschicht (3) zwischen der germaniumdotierten Kernschicht (2) und der ersten Wickelschicht (4) angeordnet ist, eine zweite Übergangsschicht (5) zwischen der ersten Wickelschicht (5) und der zweiten Wickelschicht (6) angeordnet ist und eine dritte Übergangsschicht (7) zwischen der zweiten Wickelschicht (6) und der dritten Wickelschicht (8) angeordnet ist;
**dadurch gekennzeichnet, dass**
die Differenz des relativen Brechungsindex der Kern-Gradientenschicht (1) $\Delta n1$ ist, was durch eine Gleichung: $\Delta n1 = a_1(x_1 + x_1^2 + x_1^3) + b_1$ realisiert wird, wobei $x_1$ die Entfernung von jedem Punkt in der Kern-Gradientenschicht (1) zur Achse der Schicht ist, $a_1$ der Gradientenfaktor der Kern-Gradientenschicht (1) ist, der im Bereich von 0,5 % bis 2 % liegt, und $b_1$ der Gradientenstabilitätsfaktor der Kern-Gradientenschicht (1) ist, der im Bereich von 0 bis 0,2 % liegt;
die Differenz des relativen Brechungsindex der ersten Übergangsschicht (3) $\Delta n3$ ist, was durch eine Gleichung: $\Delta n3 = b_3 (1 - a_3 x_3^2)^{0,5}$ realisiert wird, wobei $x_3$ die Entfernung von einem konzentrischen Kreis um den Mittelpunkt einer Glasfaser an jedem Punkt in der ersten Übergangsschicht (3) zum Außenrand der germaniumdotierten Kernschicht (2) ist und $a_3$ und $b_3$ Übergangsfaktoren sind, die beide im Bereich von 0,3 % bis 0,8 % liegen;
die Differenz des relativen Brechungsindex der zweiten Übergangsschicht (5) $\Delta n5$ ist, was durch eine Gleichung: $\Delta n5 = a_5 x_5^2 + b_5$ realisiert wird, wobei $x_5$ die Entfernung von einem konzentrischen Kreis um den Mittelpunkt einer Glasfaser an jedem Punkt in der zweiten Übergangsschicht (5) zum Außenrand der ersten Wickelschicht (4) ist und $a_5$ und $b_5$ Übergangsfaktoren sind, wobei $a_5$ im Bereich von -1,0 % bis -0,3 % liegt und $b_5$ im Bereich von 0 bis 0,1 % liegt; und
die Differenz des relativen Brechungsindex der dritten Übergangsschicht (7) $\Delta n7$ ist, was durch eine Gleichung: $\Delta n7 = a_7 x_7^2 + b_7$ realisiert wird, wobei $x_7$ die Entfernung von einem konzentrischen Kreis um den Mittelpunkt einer Glasfaser an jedem Punkt in der dritten Übergangsschicht (7) zum Außenrand der zweiten Wickelschicht (6) ist, und wobei $a_7$ und $b_7$ Übergangsfaktoren sind, wobei $a_7$ im Bereich von 0,1 % bis 0,4 % liegt und $b_7$ im Bereich von -1,3 % bis -0,3 % liegt.

**2.** Monomodusglasfaser mit kleinem Biegeradius nach Anspruch 1, **dadurch gekennzeichnet, dass** das Verhältnis der Dicke der germaniumdotierten Kernschicht (2) zur Dicke der ersten Wickelschicht (4) von 0,5 bis 2,0 beträgt.

**3.** Monomodusglasfaser mit kleinem Biegeradius nach Anspruch 1, **dadurch gekennzeichnet, dass** das Verhältnis der Dicke der germaniumdotierten Kernschicht (2) zur Dicke der zweiten Wickelschicht (6) von 0,2 bis 1,0 beträgt.

**4.** Monomodusglasfaser mit kleinem Biegeradius nach Anspruch 1, **dadurch gekennzeichnet, dass** die Differenz des relativen Brechungsindex der germaniumdotierten Kernschicht (2) von 0,2 % bis 0,8 % beträgt.

**5.** Monomodusglasfaser mit kleinem Biegeradius nach Anspruch 1, **dadurch gekennzeichnet, dass** die Differenz des relativen Brechungsindex der ersten Wickelschicht (4) von 0 bis 0,1 % beträgt.

**6.** Monomodusglasfaser mit kleinem Biegeradius nach Anspruch 1, **dadurch gekennzeichnet, dass** die Differenz des relativen Brechungsindex der zweiten Wickelschicht (6) von -1,3 % bis -0,3 % beträgt.

**7.** Monomodusglasfaser mit kleinem Biegeradius nach Anspruch 1, **dadurch gekennzeichnet, dass** der Durchmesser der dritten Wickelschicht (8), einer Quarz-Wickelschicht, 80 µm oder 125 µm beträgt.

8. Monomodusglasfaser mit kleinem Biegeradius nach Anspruch 1, **dadurch gekennzeichnet, dass** wenn die Betriebswellenlänge 1550 nm ist, die Dämpfung der Monomodusglasfaser mit kleinem Biegeradius unter 0,2 dB/km ist, und wenn der Biegeradius unter 2 mm liegt, der zusätzliche Verlust unter 0,35 dB liegt.

## Revendications

1. Fibre optique monomode à faible rayon de courbure avec compatibilité avec des fibres optiques G.652 conventionnelles, comprenant une couche de gradient de coeur (1) et une couche de coeur dopée au germanium (2) agencée concentriquement, et une première couche d'enveloppement (4), une seconde couche d'enveloppement (6) et une troisième couche d'enveloppement (8) agencées circonférentiellement de l'intérieur vers l'extérieur, dans laquelle

   une première couche de transition (3) est agencée entre la couche de coeur dopée au germanium (2) et la première couche d'enveloppement (4), une seconde couche de transition (5) est agencée entre la première couche d'enveloppement (5) et la seconde couche d'enveloppement (6), et une troisième couche de transition (7) est agencée entre la seconde couche d'enveloppement (6) et la troisième couche d'enveloppement (8) ; **caractérisé en ce que**
   la différence d'indice de réfraction relatif de la couche de gradient de coeur (1) est de $\Delta n1$, qui est réalisé par une équation : $\Delta n1 = a_1(x_1 + x_1^2 + x_1^3) + b_1$, où $x_1$ est la distance depuis tout point dans la couche de gradient de coeur (1) à l'axe de ladite couche, $a_1$ est le facteur de gradient de la couche de gradient de coeur (1), allant de 0,5% à 2%, et $b_1$ est un facteur de stabilité de gradient de la couche de gradient de coeur (1), allant de 0 à 0,2% ;
   la différence d'indice de réfraction relatif de la première couche de transition (3) est de $\Delta n3$, qui est réalisé par une équation : $\Delta n3 = b_3(1 - a_3x_3^2)^{0,5}$, où $x_3$ est la distance depuis un cercle concentrique autour du centre d'une fibre optique en tout point dans la première couche de transition (3) jusqu'au bord extérieur de la couche de coeur dopée au germanium (2), et $a_3$ et $b_3$ sont des facteurs de transition, compris tous deux entre 0,3% et 0,8% ;
   la différence d'indice de réfraction relatif de la seconde couche de transition (5) est de $\Delta n5$, qui est réalisé par une équation : $\Delta n5 = a_5x_5^2 + b_5$,

   où $x_5$ est la distance depuis un cercle concentrique autour du centre d'une fibre optique en tout point dans la seconde couche de transition (5) jusqu'au bord extérieur de la première couche d'enveloppement (4), et $a_5$ et $b_5$ sont des facteurs de transition, $a_5$ allant de -1,0% à -0,3%, et $b_5$ allant de 0 à 0,1%; et
   la différence d'indice de réfraction relatif de la troisième couche de transition (7) est de $\Delta n7$, qui est réalisé par une équation : $\Delta n7 = a_7x_7^2 + b_7$, où $x_7$ est la distance depuis un cercle concentrique autour du centre d'une fibre optique en tout point dans la troisième couche de transition (7) jusqu'au bord extérieur de la seconde couche d'enveloppement (6), et $a_7$ et $b_7$ sont des facteurs de transition, $a_7$ allant de 1,0% à 0,4%, et $b_7$ allant de -1,3% à -0,3%.

2. Fibre optique monomode à faible rayon de courbure selon la revendication 1, **caractérisée en ce que** le rapport de l'épaisseur de la couche de coeur dopée au germanium (2) à l'épaisseur de la première couche d'enveloppement (4) est de 0,5 à 2,0.

3. Fibre optique monomode à faible rayon de courbure selon la revendication 1, **caractérisée en ce que** le rapport de l'épaisseur de la couche de coeur dopée au germanium (2) à l'épaisseur de la seconde couche d'enveloppement (6) est de 0,2 à 1,0.

4. Fibre optique monomode à faible rayon de courbure selon la revendication 1, **caractérisée en ce que** la différence d'indice de réfraction relatif de la couche de coeur dopée au germanium (2) est de 0,2% à 0,8%.

5. Fibre optique monomode à faible rayon de courbure selon la revendication 1, **caractérisée en ce que** la différence d'indice de réfraction relatif de la première couche d'enveloppement (4) est de 0 à 0,1%.

6. Fibre optique monomode à faible rayon de courbure selon la revendication 1, **caractérisée en ce que** la différence d'indice de réfraction relatif de la seconde couche d'enveloppement (6) est de - 1,3% à -0,3%.

7. Fibre optique monomode à faible rayon de courbure selon la revendication 1, **caractérisée en ce que** le diamètre de la troisième couche d'enveloppement (8), une couche d'enveloppement en quartz, est de 80 µm ou 125 µm.

8. Fibre optique monomode à faible rayon de courbure selon la revendication 1, **caractérisée en ce que** quand la longueur d'onde de fonctionnement est de 1550nm, l'atténuation de la fibre optique monomode à faible rayon de courbure est inférieure à 0,2dB/km, et quand le rayon de courbure est inférieur à 2mm, la perte additionnelle est inférieure à 0,35dB.

FIG. 1

FIG. 2

FIG. 3

FIG. 4

FIG. 5

**EP 3 098 631 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007189699 A